# FASCICULE DE BREVET EUROPEEN

(11) **EP 2 705 296 B1**
(45) Date de publication et mention de la délivrance du brevet: **19.09.2018**
(21) Numéro de dépôt: 12718959.5
(22) Date de dépôt: 27.04.2012
(51) Int. Cl.: F17C 13/04

(54) **VANNE MONTÉE SUR UN RÉSERVOIR CONTENANT UN GAZ À HAUTE PRESSION**
AN EINEN HOCHDRUCKGASTANK MONTIERTES VENTIL
VALVE MOUNTED ON A TANK CONTAINING A HIGH-PRESSURE GAS

(30) Priorité: 04.05.2011 FR 1153817
(43) Date de publication de la demande: 12.03.2014
(73) Titulaire: Compagnie Générale des Etablissements Michelin, 63000 Clermont-Ferrand (FR)
(72) Inventeur: ESSINGER, Olivier, 63040 CLERMONT-FERRAND CEDEX 09 (FR); STACCHI, Cesare, 6648 MINUSIO (CH)
(74) Mandataire: Roussy, Delphine
(86) Numéro de dépôt international: PCT/EP2012/057707
(87) Numéro de publication internationale: WO 2012/150180

(56) Documents cités:
- US-A- 6 041 762
- US-A1- 2002 108 656
- US-A1- 2002 124 883
- US-A1- 2003 102 051
- US-A1- 2004 065 371
- US-A1- 2005 103 382
- US-A1- 2008 105 310
- US-B1- 6 360 546

## Description

La présente invention concerne le domaine des réservoirs de stockage contenant du carburant gazeux sous haute pression, tel que, par exemple, du gaz naturel, de l'oxygène ou de l'hydrogène comprimé.

Plus particulièrement, l'invention concerne des modules intégrés à un tel réservoir permettant à la fois d'alimenter un appareil utilisant du carburant gazeux contenu dans le réservoir de stockage et de remplir le réservoir de stockage en carburant gazeux. US2003010251A1 décrit une vanne pour réservoir de gaz haute pression comprenant un dispositif de remplissage, un dispositif de décharge, une conduite d'alimentation équipée d'une vanne de régulation permettant de réguler la pression du gaz haute pression en gaz à pression inférieure et, en aval, un dispositif d'alimentation muni d'une électrovanne de commande. Une des applications particulièrement intéressante de l'invention concerne un réservoir de carburant gazeux à haute pression destiné à alimenter une pile à combustible, par exemple pour un véhicule automobile.

Il est de plus en plus commun d'utiliser des carburants dits alternatifs tels que du propane ou du gaz naturel dans des moteurs à combustion interne, ou de l'hydrogène et de l'oxygène dans des cellules électrochimiques. Les carburants gazeux peuvent être stockés dans des réservoirs sous haute pression dans le but de stocker la plus grande quantité possible dans un petit volume. En cas d'accident, il ne doit pas y avoir de rupture du réservoir ou de fuite incontrôlée de gaz due, par exemple, à la rupture d'une conduite.

Les moteurs à combustion interne, ainsi que les piles à combustibles, ne peuvent cependant pas fonctionner avec du carburant à pression élevée. La pression du carburant gazeux doit donc être abaissée à une pression de fonctionnement du moteur ou de la pile à combustible. De plus, la pression du gaz entrant dans le moteur ou dans la pile à combustible doit être régulée afin de réduire les variations de la pression d'alimentation dues au fait que le réservoir se vide ou que le débit du gaz fluctue.

On connait du document EP 1 295 189 un module de régulation d'écoulement de gaz comprenant un orifice d'entrée communiquant avec une première chambre et une deuxième chambre comprenant un siège coopérant avec un téton, un élément mobile de limitation de pression et un ressort. Le ressort permet d'exercer une force qui tend à déplacer le téton en direction d'une position ouverte de circulation du fluide de la première chambre vers la deuxième chambre et l'organe mobile tend à déplacer le téton dans une position de fermeture empêchant la circulation du fluide. Le module de régulation comprend également un dispositif de décharge comportant des ressorts en cas de surpression du carburant gazeux contenu dans le réservoir. Le dispositif comprend des modules de régulation comportant une soupape de décharge afin de laisser fuir progressivement le gaz en cas de surpression ou en cas de problème du module de régulation, et un élément thermofusible permettant la décharge du gaz en cas d'augmentation de température, par exemple, par un échauffement anormal dû à un incendie.

Un des problèmes du stockage de gaz sur un véhicule est le danger en cas d'incendie survenant dans les environs du réservoir, ainsi qu'en cas d'élévation trop forte de la pression à l'intérieur du réservoir, par exemple lors du remplissage du réservoir effectué par un dispositif de remplissage capable de délivrer une pression plus haute que celle du réservoir. Par ailleurs, en cas d'accident, le risque est élevé de rompre une conduite contenant du gaz sous haute pression, ce qui engendrerait des fuites de gaz incontrôlées.

Il existe des soupapes de décharge en cas de surpression et en cas de surtempérature dans le réservoir de stockage. On peut se référer à cet égard au document FR 2 869 573 qui décrit des soupapes à déclenchement thermique et des soupapes à seuil de pression comportant une membrane de rupture. La soupape à déclenchement thermique, vissée sur un réservoir de stockage d'un fluide à haute pression, comprend un siège obturé par une bille et un ressort définissant une précharge tendant à repousser la bille contre le siège. La soupape comporte en outre un organe réalisé en alliage à mémoire de forme destiné à coopérer avec un piston interposé entre l'organe et la bille, afin de pousser la bille hors de son siège lorsque l'organe est déformé par la température.

Toutefois, un tel système est dépendant de la pression du fluide dans le réservoir. En effet l'effort nécessaire pour provoquer l'ouverture de la soupape étant dépendant de la pression dans le réservoir, la température d'activation de la soupape sera par conséquent elle aussi variable car l'effort fourni par la pastille à mémoire de forme est dépendant de la température.

On ne connait donc pas de solution satisfaisante permettant d'éviter l'explosion du réservoir.

Il y a donc un besoin d'améliorer les conditions de sécurité des véhicules stockant un carburant gazeux sous pression.

L'objectif de l'invention est de proposer une unique vanne destinée à être intégrée dans un réservoir de stockage de carburant gazeux à haute pression permettant à la fois le remplissage du réservoir et l'alimentation d'un appareil utilisant du carburant gazeux tout en intégrant des systèmes de sécurité afin de supprimer tout risque de fuite de carburant et ainsi d'améliorer les conditions de sécurité.

Un autre objectif de l'invention est de fournir une vanne la plus compacte possible afin de pouvoir mieux protéger les éléments lors d'un choc lors d'un accident, ainsi que de diminuer le risque de fuite en diminuant le nombre de joints et de connexions afin de confiner au maximum le gaz haute pression à l'intérieur du réservoir. L'invention concerne une vanne destinée à être montée sur un réservoir contenant un gaz à haute pression.

Le corps de vanne intègre un dispositif de remplissage en gaz haute pression du réservoir, au moins un dispositif de décharge du gaz lorsque la pression du gaz dans le réservoir dépasse une première valeur seuil, un dispositif de régulation de la pression du gaz haute pression en gaz basse pression et un dispositif d'alimentation en gaz basse pression destiné à être connecté à un appareil utilisant un gaz basse pression. Le dispositif d'alimentation comprend une électrovanne contrôlant l'alimentation en gaz basse pression de l'appareil utilisant le gaz basse pression.

L'électrovanne est conçue pour se fermer ou pour rester en position fermée lorsque la pression dans la conduite entre le dispositif de régulation et l'électrovanne est supérieure à une deuxième valeur seuil.

Ainsi, la vanne intégrée au réservoir de stockage permet à la fois le remplissage du réservoir, la régulation du gaz, l'alimentation d'un appareil en gaz basse pression, tout en intégrant un système de sécurité en cas de surpression du gaz dans le réservoir, et une électrovanne contrôlant le circuit de basse pression. Une telle vanne intègre plusieurs fonctions tout en étant compacte et fixée au réservoir, afin de former un ensemble complet facilement manipulable et d'installation facile, par exemple sur un véhicule. De plus, une telle vanne permet à tous les éléments intégrés dans la vanne d'être protégés en cas de chocs et ainsi de confiner la haute pression à l'intérieur du réservoir en cas de fuite interne.

Avantageusement, la vanne comprend des capteurs de pression et de température du gaz dans le réservoir, le capteur de température étant fixé dans un capot monté sur une face du corps de vanne.

Ainsi, la vanne intègre une surveillance nécessaire grâce aux différents capteurs de pression et de température. Le capteur de température débouchant d'un côté dans le réservoir et fixé de l'autre côté au capot est disposé dans un support isolé permettant d'isoler thermiquement l'extrémité de la cellule de mesure du capteur du fait de la fixation du capteur à une extrémité éloignée de la cellule de mesure.

Le dispositif de remplissage peut comprendre un clapet anti-retour, afin d'éviter que le carburant gazeux entrant dans la conduite de remplissage n'en ressorte lors de l'arrêt du remplissage.

Avantageusement, le corps de vanne présente une conduite principale débouchant dans le réservoir et reliée à trois conduites secondaires, respectivement une conduite de remplissage, une conduite d'alimentation et une conduite de décharge.

Les conduites principale, d'alimentation et de remplissage comprennent, par exemple, chacune un filtre, afin d'éviter la pénétration de particules polluantes à la fois dans le réservoir de stockage et dans l'appareil à alimenter.

Avantageusement, le dispositif de régulation comprend une chambre sous-pression comportant une membrane déformable, un organe coopérant avec un siège et un ressort repoussant ledit organe contre son siège, la membrane déformable est destinée à coopérer avec ledit organe.

Selon un mode de réalisation, la vanne comprend un deuxième dispositif de décharge du gaz haute pression lorsque la température du gaz dans le réservoir dépasse une troisième valeur seuil.

Le deuxième dispositif de décharge peut comprendre une pastille réalisée dans un alliage à mémoire de forme coopérant avec un pointeau et au moins une goupille disposé dans un premier axe, ladite goupille étant coulissante dans un logement prévu dans un piston disposé dans un second axe, de sorte que lorsque la température dépasse la troisième valeur seuil, la pastille se déforme afin de déplacer la goupille entièrement dans le logement du piston de manière à permettre au piston de coulisser selon le second axe. La translation du piston suivant le second axe est provoquée par la pression du gaz. La goupille, lorsqu'elle se situe à la fois dans le logement du piston et dans un perçage pratiqué dans le corps de vanne bloque la translation du piston suivant le second axe.

De manière préférentielle, la conduite d'alimentation comprend des moyens d'évacuation du gaz en amont du bobinage de l'électrovanne. Le capot peut comprendre une soupape de décharge évacuant le gaz présent dans le capot vers l'extérieur de la vanne. Ainsi, le bobinage et la sonde de température du bobinage ne seront pas en contact avec une éventuelle fuite de gaz, qui pourrait générer une inflammation du gaz, si dans le même temps se produisait un court-circuit dans le bobinage. Les éventuelles fuites de gaz sont dirigées, par exemple, dans le capot afin d'être évacuées vers l'extérieur au moyen de la soupape prévue à cet effet

La vanne comprend, en outre, un capteur de pression du gaz en sortie du dispositif de régulation. La mesure de la pression régulée permet la vérification du bon fonctionnement du détendeur.

Selon un mode de réalisation, le corps de vanne intègre un dispositif d'isolation du réservoir des dispositifs de remplissage et de régulation. Ainsi, le gaz contenu dans le réservoir peut être isolé des conduites de remplissage et d'alimentation, sans interférer avec les dispositifs de décharge afin de garantir une décharge de gaz en cas de problème, par exemple, surtempérature, ou surpression du gaz dans le réservoir.

La vanne peut comprendre un dispositif de purge manuelle destiné à purger la conduite située entre le dispositif de régulation et l'électrovanne.

Avantageusement, la vanne comprend une sonde de mesure de la température dans le bobinage de l'électrovanne.

La vanne comprend en outre un détecteur de fuite de gaz.

La vanne peut également comprendre une unité de commande électronique confinée dans un boitier qui peut être étanche et destinée à commander l'électrovanne, à calculer la quantité de fluide dans le réservoir à partir des valeurs mesurées de pression et de température dans le réservoir, à calculer la résistance du bobinage de l'électrovanne à partir de la valeur de température mesurée dans le bobinage, et à calculer et appliquer le courant nécessaire pour commander l'électrovanne en fonction de la valeur de la pression mesurée en sortie du dispositif de régulation. L'électronique de commande permet ainsi de ne pas ouvrir l'électrovanne au delà d'une valeur de seuil de la pression en sortie du dispositif de régulation (la valeur de seuil doit être supérieure à une valeur normale en sortie du détendeur). De plus, pour ouvrir une électrovanne de ce type il faut un effort initial plus élevé que l'effort nécessaire à la maintenir ouverte qui peut être de l'ordre de dix fois plus faible. Il est donc intéressant de limiter le courant après ouverture afin de limiter la consommation électrique et réchauffement.

Selon un second aspect, l'invention concerne un système comprenant une vanne décrit ci-dessus, une unité de commande électronique de l'électrovanne et un détecteur de fuite de gaz, l'unité de commande étant conçue pour empêcher l'ouverture de l'électrovanne en cas de détection d'une fuite de gaz à proximité de la vanne.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 représente une vue en coupe partielle d'une vanne selon l'invention montée dans un réservoir ;
- la figure 2 représente une vue en perspective d'une vanne selon la figure 1 ;
- la figure 3 représente une vue de dessus de la vanne selon la figure 2 ;
- la figure 4 représente une vue en coupe IV-IV selon la figure 3 ;
- la figure 5 représente une vue en coupe V-V selon la figure 3 ;
- la figure 6 représente une vue en coupe VI-VI selon la figure 3 ;
- la figure 7 illustre un détail de la figure 6 ;
- la figure 8 représente une vue en détail en coupe VIII-VIII selon la figure 1 ;
- la figure 9 représente une vue en coupe IX-IX selon la figure 1, et
- la figure 10 représente une vue en coupe X-X selon la figure 3.

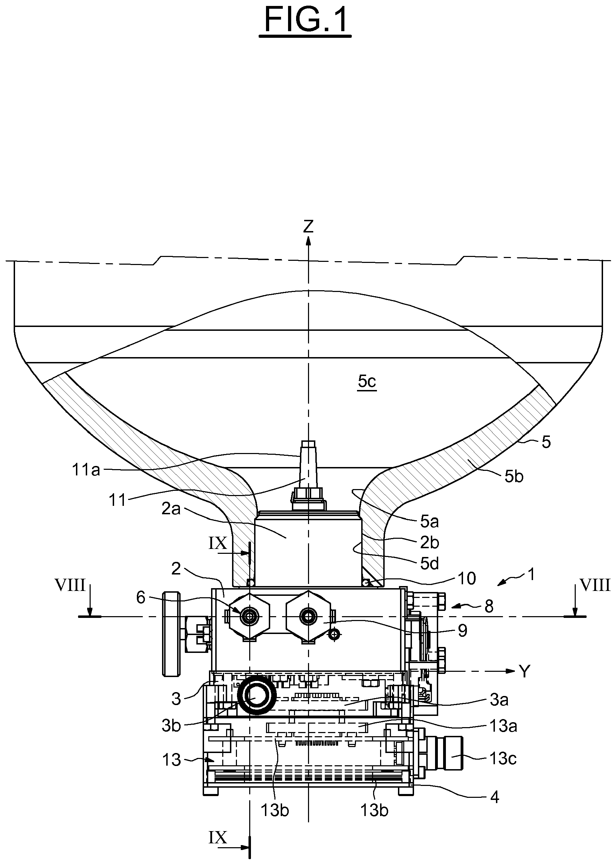

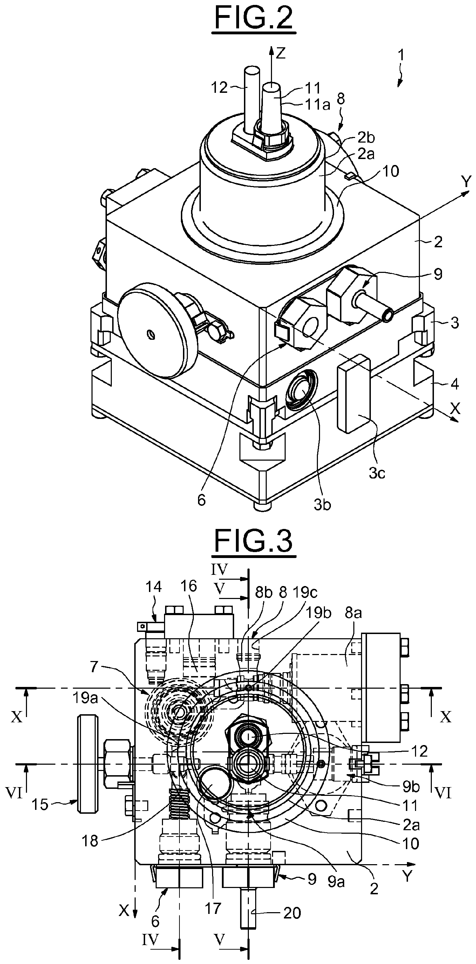

Telle qu'illustrée sur les figures 1 et 2, une vanne, référencée 1 dans son ensemble, comprend un corps de vanne 2, un capot principal 3 monté sur une des faces du corps de vanne 2 et un capot secondaire 4 monté sur une des faces du capot principal 3. Dans l'exemple illustré, la vanne 1 est définie suivant trois axes, respectivement horizontal X, transversal Y et vertical Z.

La vanne 1 est destinée à être montée entre un réservoir de stockage 5 contenant un gaz à une première pression dite « haute pression », tel que par exemple du gaz naturel comprimé, de l'hydrogène comprimé ou encore de l'oxygène comprimé et une sortie telle que, par exemple, un appareil utilisant du gaz à une deuxième pression dite « basse pression ». La première pression est supérieure à la deuxième pression. La première pression dite « haute pression » est comprise, à titre d'exemple non limitatif, entre 100 et 700 bars et la deuxième pression dite « basse pression » est comprise entre 5 et 20 bars. Il peut s'agir, par exemple, d'un réservoir destiné à alimenter en gaz une pile à combustible.

Le réservoir 5 présente, à titre d'exemple non limitatif, une forme générale de bonbonne s'étendant suivant l'axe vertical Z. Le réservoir 5 est pourvu d'un orifice 5a permettant le remplissage du réservoir 5 en gaz haute pression. Le réservoir 5 illustré en coupe partielle sur la figure 1 comprend une paroi extérieure 5b délimitant une enceinte de stockage 5c du gaz haute pression. L'orifice de remplissage 5a comporte un taraudage 5d destiné à coopérer avec la vanne 1. On notera que l'on pourrait prévoir un autre moyen de fixation de la vanne 1 sur le réservoir de stockage 5.

Le corps de vanne 2, de forme générale parallélépipédique, intègre un dispositif de remplissage 6 du réservoir 5 en gaz haute pression, un dispositif de régulation 7 (non visible sur les figures 1 et 2) de la pression du gaz contenu dans le réservoir 5, un dispositif d'alimentation 8 en gaz basse pression d'un appareil (non représenté) utilisant un gaz basse pression, tel que par exemple, un véhicule automobile et un système de sécurité 9 permettant d'éviter l'explosion du réservoir 5. Le dispositif de régulation 7 sera appelé dans la suite de la description « détendeur ». Le corps de vanne 2 présente un raccord 2a, de forme générale cylindrique, en saillie vers l'extérieur de la vanne 1 et comportant un filetage 2b destiné à coopérer avec le taraudage 5d du réservoir de stockage 5. Un joint d'étanchéité 10, par exemple annulaire, peut être disposé à l'extrémité de l'orifice de remplissage 5a afin d'assurer l'étanchéité entre la vanne 1 et le réservoir 5 afin que le gaz haute pression soit confiné dans le réservoir 5. La vanne 1 est donc montée sur le réservoir de stockage 5 par vissage.

Ainsi, la vanne 1 intégrée au réservoir de stockage 5 permet à la fois le remplissage du réservoir 5, la régulation du gaz, l'alimentation d'un appareil en gaz basse pression, tout en intégrant un système de sécurité 9, notamment lorsque la pression du gaz dans le réservoir 5 dépasse une première valeur seuil, par exemple de 525 bars. Une telle vanne 1 intègre plusieurs fonctions qui seront décrites en détail ci-dessous.

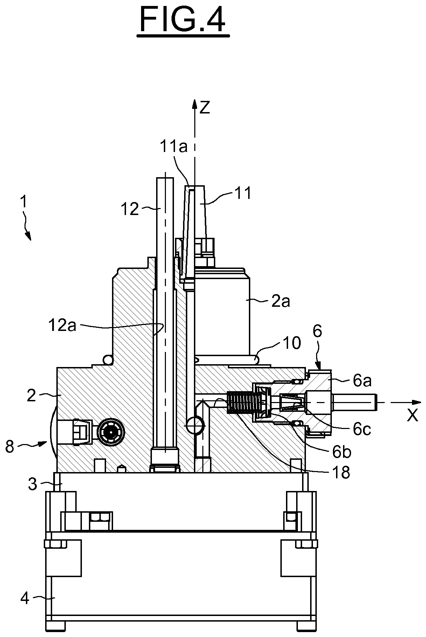

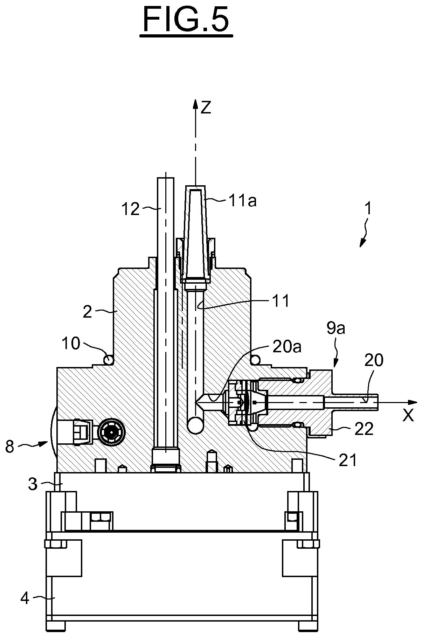

Le corps de vanne 2 présente une conduite principale 11, dont une extrémité est représentée sur les figures 1 et 2 et un capteur de température 12 à l'intérieur du réservoir 5 débouchant dans le réservoir de stockage 5. Le capteur de température 12 est déporté par un support isolé 12a, visible sur les figures 4 et 5, afin d'être isolé thermiquement du corps de vanne 2 pour garantir l'exactitude des valeurs de température de gaz mesurées. En effet, la cellule de mesure (non représentée) se trouve à l'extrémité du capteur de température 12 débouchant dans le réservoir, le corps du capteur de température 12 situé dans le support isolé 12a permet d'isoler thermiquement la cellule de mesure de son point de fixation dans le capot principal 3. Le support isolé 12a est un perçage pratiqué dans le corps de vanne 2 afin d'éviter tout contact entre le corps de vanne 2 et le corps du capteur de température 12. L'isolation du capteur de température 12 est renforcée par la présence de gaz sous pression dans le perçage 12a, entre le corps du capteur de température 12 et le corps de vanne 2. De plus, la distance entre la cellule de mesure et le point de fixation du capteur de température sous le capot 3, qui crée une étanchéité du gaz présent dans le support isolé 12a, permet d'isoler la cellule de mesure afin d'éviter des mesures de température erronées dues à des variations de température du corps de vanne 2, par exemple, dues à un échauffement de l'électrovanne 8a pendant son fonctionnement et donc d'avoir une mesure réelle de la température du gaz dans le réservoir 5. L'extrémité de la conduite principale 11 est pourvue d'un filtre principal 11a afin d'éviter la pénétration de particules polluantes dans le réservoir de stockage 5 et dans la vanne elle-même.

La vanne 1 intègre, en outre, des capteurs de pression 16 et 17 (visibles sur la figure 3), notamment dans le réservoir 5, et au niveau du détendeur 7.

Les éléments intégrés dans les capots principal 3 et secondaire 4 sont visibles par transparence sur la figure 1.

Le capot principal 3, monté dans l'exemple illustré sur la face inférieure du corps de vanne 1, intègre une fiche de connexion électrique 3a reliant les câbles électriques (non représentés) des capteurs et du dispositif d'alimentation 8 à une unité de commande électrique 13 disposée dans le capot secondaire 4 monté sur une face du capot principal 3. On notera que l'on ne sort pas du cadre de l'invention lorsque le capot secondaire 4 ne fait pas partie intégrante de la vanne 1 et que l'unité de commande électrique 13 est disposée dans un boitier étanche n'étant pas en contact avec la vanne 1.

Le capot secondaire 4 comprend à cet effet une connexion électrique 13a destinée à coopérer avec la connexion électrique 3a du capot principal 3, ainsi qu'un ou plusieurs circuits imprimés 13b et un raccord électrique 13c.

Le capot principal 3 comprend, en outre, une soupape de décharge 3b en cas de fuite du gaz dans le capot principal 3. La soupape 3b peut être formée, par exemple, par une lèvre en élastomère afin d'empêcher également la pénétration d'impuretés ou d'eau dans le capot principal 3. Les éventuelles fuites de gaz sous pression peuvent ensuite être évacuées, soit naturellement, soit par une ventilation forcée (non représentée), par exemple activée par un détecteur de fuite de gaz 3c qui peut se trouver comme ici intégré à la vanne ou au contraire installé à proximité de la vanne mais de manière indépendante. Ce détecteur permet donc de détecter les éventuelles fuites de gaz et par exemple de ne pas autoriser l'ouverture de l'électrovanne et/ou de couper toute alimentation électrique du système. Le passage des signaux électriques entre la vanne 1 et l'unité de commande électrique 13 se fait donc à travers deux connexions électriques étanches 3a, 13a, évitant ainsi qu'une éventuelle fuite de gaz d'un ou plusieurs éléments pouvant donner lieu à une zone enrichie en gaz dangereux inflammable, ne puisse provoquer un incendie ou une explosion du réservoir de stockage 5 due à une étincelle ou à un court-circuit généré par l'électronique qui serait dangereux à la fois pour le réservoir sous pression et les personnes ou le matériel se trouvant à proximité. Les éléments électriques tels que les capteurs de pression et de température, qui peuvent être entourés d'une éventuelle fuite de gaz, sont disposés de manière à ne pas générer d'étincelles ou de court-circuits.

L'unité de commande électrique 13 permet de gérer les différentes mesures de pression et de température du gaz données par les différents capteurs, de commander le dispositif d'alimentation 8 en gaz basse pression. L'unité électronique 13 permet également de calculer la quantité de gaz contenue dans le réservoir de stockage 5.

De plus, l'unité de commande électrique 13 peut être conçue de façon à pouvoir se tester elle-même et pouvoir tester le bon fonctionnement des différents éléments du système (Built-In Test Equipment). Ce test peut être effectué par exemple à chaque enclenchement du système permettant ainsi de garantir son bon fonctionnement avant son utilisation.

Le corps de vanne 2, représenté en vue de dessus sur la figure 3, illustre en traits pointillés les éléments intégrés dans le corps de vanne 2. On distingue ainsi un dispositif de remplissage 6, un détendeur 7, un dispositif d'alimentation 8, deux dispositifs de décharge 9a, 9b, un moyen de purge manuelle 14, des moyens d'isolation 15 permettant d'isoler le réservoir du détendeur 7 et du dispositif de remplissage 6. Le corps de vanne 2 intègre également des moyens de mesures 12, 16, 17, tels que des capteurs de température et de pression.

Le corps de vanne 2 présente une conduite principale 11, suivant l'axe vertical Z, débouchant dans le réservoir de stockage 5 et reliée à trois conduites secondaires 18, 19, 20, respectivement une conduite de remplissage 18, une conduite d'alimentation 19 et une conduite de décharge 20. Les conduites principale 11, d'alimentation 19 et de remplissage 18 comprennent chacune un filtre, afin d'éviter la pénétration de particules polluantes à la fois dans le réservoir de stockage 5 et dans l'appareil à alimenter, ainsi que dans l'ensemble de la vanne. La conduite principale 11 étant reliée à la fois à la conduite de remplissage 6 et d'alimentation 19, le filtre 11a de la conduite principale 11 est auto nettoyé par le passage du gaz dans les deux sens.

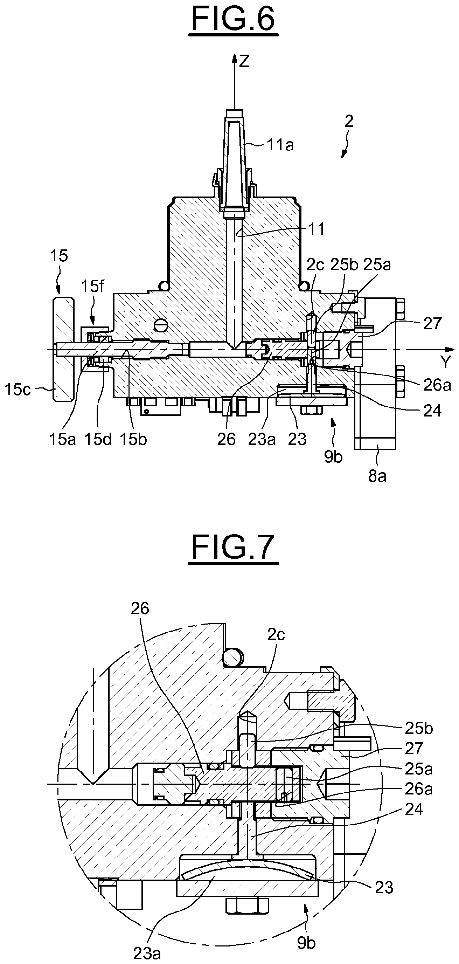

Les conduites de remplissage 6 et d'alimentation 19 sont reliées entre elles. Le gaz contenu dans le réservoir de stockage 5 peut être isolé des conduites de remplissage 6 et d'alimentation 19 grâce au dispositif d'isolation 15 décrit en détail à la figure 6. Les conduites de remplissage 6 et d'alimentation 19 sont dans tous les cas communicantes entre elles.

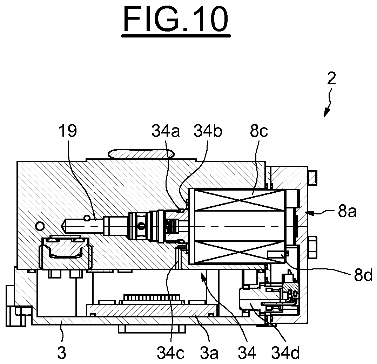

La conduite d'alimentation 19 comprend une conduite de régulation 19a, suivant un axe horizontal X, amenant le gaz haute pression vers le détendeur 7, une conduite intermédiaire 19b, suivant un axe transversal Y, et une conduite d'approvisionnement 19c, suivant un axe horizontal X, d'un appareil utilisant un gaz basse pression. Le dispositif d'alimentation 8 comprend une électrovanne 8a et un filtre de sortie 8b sur lequel vient se raccorder un raccord pneumatique (non représenté) destiné à être connecté à l'appareil utilisant le gaz basse pression et équipé également d'un filtre. L'électrovanne 8a gère l'alimentation de gaz régulé, c'est-à-dire du gaz basse pression, vers l'extérieur du réservoir 5 et est commandée par l'unité de commande électronique 13. L'électrovanne 8a, qui contrôle la conduite d'approvisionnement 19c, intègre une bobine 8c et une sonde de mesure de la température 8d dans le bobinage 8c, illustrés à la figure 10. L'unité de commande électronique 13 calcule la résistance du bobinage 8c de l'électrovanne 8a selon la valeur de la température mesurée dans le bobinage 8c et calcule en outre le courant nécessaire pour commander l'électrovanne 8a à une pression normale. En cas de pression du gaz dans la conduite intermédiaire 19b située entre le détendeur 7 et l'électrovanne 8a est supérieure à une deuxième valeur seuil, par exemple en cas de défaut du détendeur 7 non détectée par le capteur de pression 16 en sortie du détendeur 7, l'électrovanne 8a est conçue pour résister à la pression supérieure à la valeur de pression normale et rester fermée. En effet, la possibilité de calculer puis d'appliquer le courant juste nécessaire pour commander l'électrovanne 8a à une pression normale, inférieure à la deuxième valeur seuil, permet de ne pas pouvoir physiquement ouvrir l'électrovanne 8a en cas de pression supérieure à la pression normale mais non détectée par le capteur de pression 16. Dans le cas où le capteur de pression 16 est défaillant, il est possible de commander l'ouverture de l'électrovanne 8a. La deuxième valeur seuil peut, par exemple, être égale à 20 bars.

La vanne 1 comprend un dispositif de purge 14 manuelle destiné à purger la conduite intermédiaire 19b située entre le détendeur 7 et l'électrovanne 8a. La purge effectuée par le dispositif de purge 14 est cependant nécessaire uniquement en cas de disfonctionnement du détendeur.

La vanne 1 comporte en outre des capteurs de pression 17 et de température 12a du gaz dans le réservoir 5, et un capteur de pression 16 dans la conduite intermédiaire 19b.

Tel qu'illustré sur la figure 4, le dispositif de remplissage 6 est disposé dans la conduite de remplissage 18 et comprend un raccord de remplissage 6a comportant un clapet anti-retour 6b, afin d'éviter que le carburant entrant dans la conduite de remplissage 18 ne sorte. Le clapet anti-retour 6b permet le remplissage du réservoir de stockage 5 lors d'une différence de pression entre l'intérieur du réservoir 5 et la portion de la conduite de remplissage 18 en amont du clapet anti-retour 6b. Le raccord de remplissage 6b est équipé d'un filtre 6c afin de garantir la propreté des composants de la vanne 1 et du gaz lui-même. Le dispositif de remplissage 6 peut intégrer, en outre, un moyen de purge (non représenté) de la conduite de remplissage 18 une fois le remplissage du réservoir 5 effectué. Le moyen de purge ne fait pas partie de la vanne 1 mais peut être intégré dans le véhicule automobile sur lequel on a monté le réservoir équipé de la vanne 1, cela afin de garantir que la portion de conduite de remplissage 18 située en amont du clapet anti-retour 6b ne reste sous pression.

Le corps de vanne 2 comprend deux dispositifs de décharge 9a, 9b, respectivement un premier dispositif de décharge 9a lorsque la pression du gaz dans le réservoir de stockage 5 est supérieure à une première valeur seuil, par exemple de 525 bars et un deuxième dispositif de décharge 9b lorsque la température du gaz dans le réservoir 5 est supérieure à une troisième valeur seuil, par exemple de 90°C. Le premier dispositif de décharge 9a, illustré en détail à la figure 5, est disposé dans une conduite de décharge principale 20a reliée à la conduite principale 11. La conduite de décharge principale 20a est disposée suivant un axe horizontal X. Le premier dispositif de décharge 9a comporte un disque de rupture métallique 21 en cas de pression trop élevée dans le réservoir 5. La conduite principale de décharge 20a comprend un raccord de décharge 22 disposé en amont du disque de rupture 21 et destiné à évacuer le gaz haute pression en cas d'ouverture du premier dispositif de décharge 9a. Le disque de rupture 21 est connu et ne sera donc pas davantage décrit. Cependant, ce premier dispositif de décharge 9a peut être omis dans le cas où l'utilisation du réservoir de stockage 5 est suffisamment contrôlée pour garantir que la pression de remplissage ne dépasse pas les valeurs prévues.

Le deuxième dispositif de décharge 9b, illustré en détail aux figures 6 à 8, est disposé dans une conduite de décharge secondaire 20b reliée à la conduite de décharge 20 en amont du premier dispositif de décharge 9a et à la conduite principale 11. Le deuxième dispositif de décharge 9b permet de libérer le gaz haute pression quand une température trop élevée est détectée, afin d'éviter une explosion du réservoir 5 lors, par exemple d'un incendie. A cet effet, le deuxième dispositif de décharge 9b comprend de préférence une pastille 23 réalisée dans un alliage à mémoire de forme disposée dans une chambre fermée 23a et coopérant avec un pointeau 24 et deux goupilles 25, 25b disposées selon l'axe Z. Le corps de vanne 2 comporte une encoche 2b destinée à coopérer avec une des goupilles 25b. Un piston 26, suivant l'axe transversal Y, comprend un perçage 26a coopérant avec les goupilles 25a, 25b, de diamètre ajusté au diamètre des goupilles 25a, 25b, et est disposé dans la conduite de décharge secondaire 20b. Le piston 26 empêche le gaz de circuler vers la conduite de décharge 20. Un écrou 27 est monté afin de maintenir axialement le piston 26. En position de repos, illustrée sur la figure 6, les goupilles 25a, 25b sont disposées dans le perçage 26a du piston 26 et l'encoche 2c du corps de vanne 2 afin de bloquer la translation du piston 26 suivant l'axe Y. L'orifice de décharge débouchant dans la conduite de décharge 20 est ainsi obturé par le piston 26. La figure 7 illustre un détail de la figure 6, dans le cas où le dispositif de décharge thermique 9b est en position ouverte. En cas d'augmentation de la température au-delà d'une troisième valeur seuil, par exemple de 90°C, tel qu'illustré sur la figure 7, la pastille à mémoire de forme 23 reprend sa forme initiale bombée sous l'effet de l'augmentation de la température. Le pointeau 24 est déplacé en translation suivant l'axe vertical Z, et déplace à son tour les goupilles 25a, 25b, qui viennent libérer la translation du piston 26 suivant l'axe transversal Y. Sous l'effet de la pression du gaz, le piston 26 se déplace en position reculée, bloqué en translation par l'écrou 27, de manière à laisser échapper le gaz vers la conduite de décharge 20. Le deuxième dispositif de décharge 9b assure l'évacuation du gaz lors d'une augmentation de température, par exemple de 90°C, même lorsque le réservoir 5 n'est pas plein.

Dans l'exemple illustré sur la figure 6, le corps de vanne 2 intègre un dispositif d'isolation manuelle 15, par exemple une vanne manuelle, disposé entre les dispositifs de régulation 7 et de remplissage 6, de manière à isoler le gaz contenu dans le réservoir 5 des conduites d'alimentation 19 et de remplissage 18 sans interférer avec les dispositifs de décharge 9. Le dispositif d'isolation 15 comprend un pointeau 15a, de forme générale cylindrique, inséré dans une conduite d'isolation 15b filetée afin d'être mobile en translation dans la conduite d'isolation 15b, relié à une poignée 15c, et d'une garniture d'étanchéité 15d serrée par un écrou 15f assurant l'étanchéité du corps de vanne 2. L'extrémité du pointeau 15a permet, en cas de fermeture de la vanne manuelle 15, d'obturer la conduite principale 11 des conduites d'alimentation 19 et de remplissage 18, tout en laissant le passage entre la conduite principale 11 et les conduites de décharge 20a, 20b.

La fermeture du dispositif d'isolation 15 peut être nécessaire avant un arrêt prolongé de la vanne 1 afin de limiter la propagation d'éventuelles fuites de gaz en cas de disfonctionnement du détendeur 7 ou pour garantir la non ouverture en cas d'erreur de commande de l'électrovanne 8a. De plus, une telle vanne 1 permet la maintenance des éléments situés sur les conduites d'alimentation 19 et de remplissage 18 sans besoin de démonter la vanne 1 ou de vider le réservoir de stockage 5. Le dispositif d'isolation 15 n'interfère pas sur les capteurs de pression et température 16, 17 à l'intérieur du réservoir.

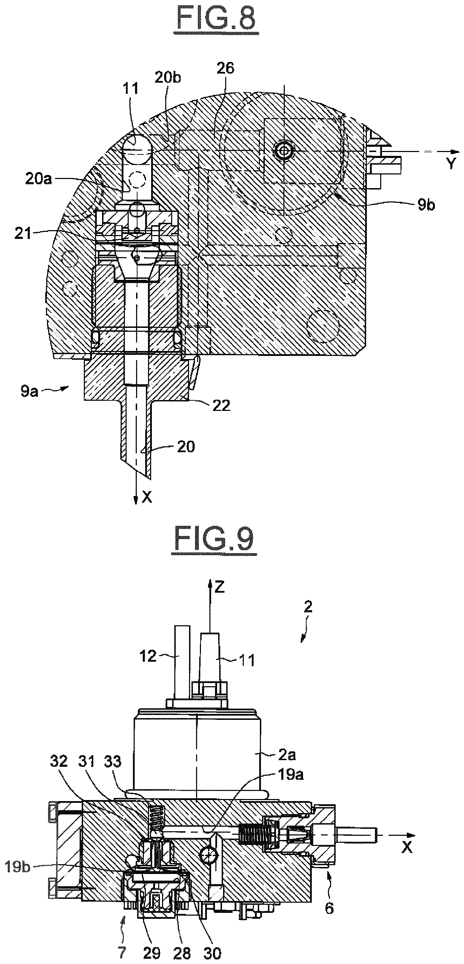

Tel qu'illustré à la figure 9, le corps de vanne 2 intègre un détendeur 7 permettant d'obtenir, à partir d'un gaz haute pression, par exemple entre 350 bars à 700 bars, un gaz de sortie basse pression, par exemple entre 10 bars à 20 bars. Le détendeur 7 comprend une chambre fermée 28 sous pression intégrant une membrane déformable 29 qui accepte le mouvement imposé sans déformation plastique et qui est reliée à un arbre 30. Le détendeur 7 comporte un organe 31, tel qu'un pointeau ou une bille, coopérant avec un siège 32 et un ressort 33 repoussant la bille 31 contre son siège 32. Lorsqu'il y a une chute de pression dans la conduite intermédiaire 19b, due à l'ouverture de l'électrovanne 8a afin d'alimenter l'appareil en gaz basse pression, la membrane déformable 29 fléchit sous l'effet de la pression de réglage dans la chambre sous pression 28. La membrane 29 pousse, par l'intermédiaire de l'axe 30, la bille 31 qui se déplace suivant l'axe vertical Z et se détache de son siège 32 en libérant le passage du gaz entre la conduite de régulation 19a et la conduite intermédiaire 19b. Lorsque la pression dans la conduite intermédiaire 19b est rétablie, par exemple lors de la fermeture de l'électrovanne 8a, la membrane 29 revient en position d'équilibre et la bille 31, poussée par le ressort 33 crée l'étanchéité avec son siège 32. La membrane 29 et la chambre sous pression 28 jouent le rôle d'un ressort pneumatique. Ce ressort pneumatique est soumis aux mêmes variations de température que le gaz, la force exercée sur la bille 31 est donc variable. Ainsi, la basse pression se trouve modulée en fonction de la température du gaz, ce qui tend à rendre constant le nombre de molécules de gaz passant par unité de temps à travers le détendeur 7. Le débit massique du détendeur 7 est donc constant malgré les variations température. Le filtre principal 11a permet non seulement que d'éventuelles impuretés présentes dans le réservoir 5 ne soit évacuées vers l'extérieur et que les éventuelles impuretés ne viennent pas se coincer entre le siège 32 du détendeur 7 et la bille 31, engendrant ainsi une fuite du détendeur 7. Pour faire face à une éventuelle défaillance du détendeur 7, on peut prévoir que l'électrovanne 8a puisse se fermer et résister à la haute pression et prévue pour s'ouvrir uniquement lorsque la pression du gaz dans la conduite intermédiaire 19b ne dépasse pas la deuxième valeur de seuil, par exemple de 20 bars. Ainsi, lors de fuite lente ou rapide du détendeur, due par exemple à l'usure du siège ou à un coincement du piston en position ouverte, l'électrovanne 8a est conçue pour se fermer ou rester en position fermée afin d'éviter l'évacuation de la fuite de gaz haute pression vers l'extérieur.

La figure 10 illustre un dispositif de sécurité supplémentaire 34 permettant la protection de la bobine 8c de l'électrovanne 8a. La bobine 8c de l'électrovanne 8a ne doit pas rentrer en contact avec des éventuelles fuites de gaz. Pour cela, l'électrovanne 8a comporte deux joints d'étanchéité 34a, 34b disposés entre la conduite d approvisionnement 19b et la bobine 8c. En cas de fuite du premier joint 34a de l'électrovanne 8a, la fuite est stoppée par le deuxième joint 34b et est acheminée à travers un orifice 34c dans le corps de vanne 2 vers le premier capot 3. La fuite est ensuite évacuée vers l'extérieur par la soupape de décharge 3b, visible sur la figure 1. Les câbles de la bobine 8c et la sonde de mesure de la température 8d dans le bobinage 8c intégrée à l'électrovanne sont connectés à la connexion électrique 3a via un connecteur étanche 34d empêchant les éventuelles fuites de gaz de revenir vers la bobine 8c.

Le corps de vanne 2, réalisé par exemple en acier inoxydable, et intégrant toutes les fonctions décrites ci-dessus permet de supprimer tout risque de fuite lié à une rupture d'une conduite à haute pression externe, en confinant le gaz à haute pression à l'intérieur du réservoir de stockage 5 ou du corps de vanne 2. En effet, toutes les conduites à haute pression étant internes à la vanne 1, les conduites sont protégées en cas de choc contre le corps de vanne 2 et ne peuvent être séparées.

On notera que tous les éléments décrits ci-dessous sont reliés à la masse afin d'éviter la formation d'une étincelle due à une différence de potentiel. Lors du remplissage le système est par exemple relié au châssis (ou au sol) afin de le mettre au même potentiel que le pistolet de remplissage.

La vanne intégrée décrite ci-dessus propose des dispositifs de protection contre l'éclatement du réservoir, par l'intégration d'un dispositif de décharge en cas de surpression et d'un dispositif de décharge en cas de surtempérature. De plus, l'électrovanne 8a ne permet pas l'alimentation d'un appareil extérieur en gaz, lors d'un dysfonctionnement du détendeur, et l'électronique ainsi que les bobines de l'électrovanne sont isolés des éventuelles fuites de gaz à l'intérieur et à l'extérieur de la vanne.

La vanne d'isolation permet d'isoler la conduite principale des conduites d'alimentation et de remplissage, sans interférer avec les dispositifs de décharge, ni avec les capteurs de température et de pression dans le réservoir, ce qui permet d'avoir des mesures à tout moment. La mesure de la température associée à la mesure de la pression dans le réservoir permet de calculer la quantité de molécules contenues dans le réservoir de stockage et d'en déduire l'autonomie du système ainsi que de détecter une éventuelle fuite de la vanne ou du réservoir s'il n'est pas en train d'alimenter, ou du système alimenté en comparant sa consommation estimée avec la consommation mesurée. Par ailleurs, la vanne d'isolation permet d'effectuer la maintenance du détendeur ainsi que de l'électrovanne sans démonter la vanne et même en cas de réservoir plein.

L'électrovanne étant conçue afin d'être résistante à la haute pression, les éventuelles fuites du détendeur ne seront pas transmises vers l'extérieur.

Grâce à l'invention qui vient d'être décrite, la vanne est aisément et rapidement positionnée et fixée sur un réservoir, et l'ensemble est facilement monté, par exemple, dans un véhicule automobile.

## Revendications

1. Vanne destinée à être montée sur un réservoir (5) contenant un gaz haute pression, comprenant un corps de vanne (2) intégrant un dispositif de remplissage (6) en gaz haute pression du réservoir (5), au moins un dispositif de décharge (9a) du gaz lorsque la pression du gaz dans le réservoir (5) dépasse une première valeur seuil, un dispositif de régulation (7) de la pression du gaz haute pression en gaz basse pression, et un dispositif d'alimentation (8) en gaz basse pression destiné à être connecté à un appareil utilisant un gaz basse pression, le dispositif d'alimentation (8) comprenant une électrovanne (8a) contrôlant l'alimentation en gaz basse pression de l'appareil utilisant le gaz basse pression, **caractérisée en ce que** l'électrovanne (8a) est conçue pour se fermer ou pour rester en position fermée lorsque la pression dans la conduite entre le dispositif de régulation (7) et l'électrovanne (8a) est supérieure à une deuxième valeur seuil.

2. Vanne selon la revendication 1, comprenant des capteurs de pression (17) et de température (12a) du gaz dans le réservoir (5), ledit capteur de température (12a) étant fixé dans un capot (3) monté sur une face du corps de vanne (2).

3. Vanne selon la revendication 1 ou 2, dans laquelle le dispositif de remplissage (6) comprend un clapet anti-retour (6b).

4. Vanne selon l'une des revendications précédentes, dans laquelle le corps de vanne (2) présente une conduite principale (11) débouchant dans le réservoir (5) et reliée à trois conduites secondaires (18, 19, 20), respectivement une conduite de remplissage (18), une conduite d'alimentation (19) et une conduite de décharge (20).

5. Vanne selon la revendication 4, dans laquelle les conduites principales (11), de remplissage (18) et d'alimentation (19) comprennent chacune un filtre (11a, 6c, 8b).

6. Vanne selon l'une des revendications précédentes, dans laquelle le dispositif de régulation (7) comprend une chambre sous-pression (28) comportant une membrane déformable (29), un organe (31) coopérant avec un siège (32) et un ressort (33) repoussant ledit organe (31) contre son siège (32), la membrane déformable (29) coopérant avec ledit organe (31).

7. Vanne selon l'une des revendications précédentes, comprenant un deuxième dispositif de décharge (9b) du gaz haute pression lorsque la température du gaz dans le réservoir (5) dépasse une troisième valeur seuil.

8. Vanne selon la revendication 7, dans laquelle le deuxième dispositif de décharge (9b) comprend une pastille (23) réalisée dans un alliage à mémoire de forme coopérant avec un pointeau (24) et au moins une goupille (25a, 25b) disposé dans un premier axe vertical (Z), ladite goupille (25a, 25b) étant coulissante dans un logement (26a) prévu dans un piston (26) disposé dans un second axe transversal (Y), de sorte que lorsque la température dépasse la troisième valeur seuil, la pastille (23) se déforme afin de déplacer la goupille (25a, 25b) entièrement dans le logement (26a) du piston (26).

9. Vanne selon l'une des revendications 4 à 8, dans laquelle la conduite d'alimentation (19) comprend des moyens d'évacuation du gaz (34c) en amont du bobinage (8c) de l'électrovanne (8a).

10. Vanne selon l'une des revendications 2 à 9, dans laquelle le capot (3) comprend une soupape de décharge (3b) évacuant le gaz présent dans le capot (3) vers l'extérieur de la vanne (1).

11. Vanne selon l'une des revendications précédentes, comprenant un capteur de pression (16) du gaz en sortie du dispositif de régulation (7).

12. Vanne selon l'une des revendications précédentes, dans laquelle le corps de vanne (2) intègre un dispositif d'isolation (15) du réservoir des dispositifs de régulation (7) et de remplissage (6).

13. Vanne selon l'une des revendications précédentes, comprenant un dispositif de purge manuelle (14) disposé entre le dispositif de régulation (7) et l'électrovanne (8a).

14. Vanne selon l'une des revendications précédentes, comprenant une sonde de mesure (8d) de la température dans le bobinage (8c) de l'électrovanne (8a).

15. Vanne selon l'une des revendications précédentes comprenant un détecteur de fuite de gaz (3c).

16. Vanne selon l'une des revendications précédentes, comprenant une unité de commande électronique (13) confinée dans un boitier étanche (4) et destinée à commander l'électrovanne (8a), à calculer la masse de gaz contenu dans le réservoir (5), à partir des valeurs mesurée de pression et de température dans le réservoir (5), à calculer la résistance du bobinage (8c) de l'électrovanne (8a) à partir de la valeur de la température mesurée dans le bobinage (8c), et à calculer et appliquer le courant nécessaire pour commander l'électrovanne (8a) en fonction de la valeur de pression mesurée en sortie du dispositif de régulation (7).

17. Système comprenant une vanne (1) selon l'une des revendications 1 à 15, une unité de commande électronique de l'électrovanne (8a) et un détecteur de fuite de gaz, l'unité de commande étant apte à empêcher l'ouverture de l'électrovanne (8a) en cas de détection d'une fuite de gaz à proximité de la vanne (1).

## Patentansprüche

1. Ventil, das dazu bestimmt ist, auf einem Behälter (5), der ein Hochdruckgas enthält, montiert zu sein, umfassend einen Ventilkörper (2), der eine Vorrichtung (6) zum Füllen des Behälters (5) mit Hochdruckgas einschließt, mindestens eine Vorrichtung (9a) zum Ablassen des Gases, wenn der Druck des Gases im Behälter (5) einen ersten Grenzwert überschreitet, eine Vorrichtung (7) zur Regelung des Drucks des Hochdruckgases zu Niederdruckgas und eine Vorrichtung (8) zur Versorgung mit Niederdruckgas, die dazu bestimmt ist, an ein Gerät angeschlossen zu werden, das Niederdruckgas verwendet, wobei die Versorgungsvorrichtung (8) ein Magnetventil (8a) umfasst, das die Versorgung des Geräts, das Niederdruckgas verwendet, mit Niederdruckgas kontrolliert, **dadurch gekennzeichnet, dass** das Magnetventil (8a) eingerichtet ist, um sich zu schließen oder um in geschlossener Position zu bleiben, wenn der Druck in der Leitung zwischen der Regelungsvorrichtung (7) und dem Magnetventil (8a) höher als ein zweiter Grenzwert ist.

2. Ventil nach Anspruch 1, umfassend Druck- (17) und Temperaturfühler (12a) des Gases in dem Behälter (5), wobei der Temperaturfühler (12a) in einer Kappe (3) befestigt ist, die auf einer Seite des Ventilkörpers (2) montiert ist.

3. Ventil nach Anspruch 1 oder 2, bei dem die Füllvorrichtung (6) eine Rückschlagklappe (6b) umfasst.

4. Ventil nach einem der vorhergehenden Ansprüche, bei dem der Ventilkörper (2) eine Hauptleitung (11) aufweist, die in den Behälter (5) mündet und mit drei Hilfsleitungen (18, 19, 20), einer Füllleitung (18), einer Versorgungsleitung (19) bzw. einer Ablassleitung (20), verbunden ist.

5. Ventil nach Anspruch 4, bei dem die Haupt- (11), Füll- (18) und Versorgungsleitungen (19) jeweils einen Filter (11a, 6c, 8b) umfassen.

6. Ventil nach einem der vorhergehenden Ansprüche, bei dem die Regelungsvorrichtung (7) eine Unterdruckkammer (28) umfasst, umfassend eine verformbare Membran (29), ein Element (31), das mit einem Sitz (32) zusammenwirkt, und eine Feder (33), die das Element (31) gegen seinen Sitz (32) zurückschiebt, wobei die verformbare Membran (29) mit dem Element (31) zusammenwirkt.

7. Ventil nach einem der vorhergehenden Ansprüche, umfassend eine zweite Ablassvorrichtung (9b) des Hochdruckgases, wenn die Temperatur des Gases in dem Behälter (5) einen dritten Grenzwert überschreitet.

8. Ventil nach Anspruch 7, bei dem die zweite Ablassvorrichtung (9b) ein Plättchen (23), das aus einer Legierung mit Formgedächtnis hergestellt ist und mit einer Nadel (24) zusammenwirkt, und mindestens einen Stift (25a, 25b) umfasst, der in einer ersten Vertikalachse (Z) angeordnet ist, wobei der Stift (25a, 25b) in einer Aufnahme (26a), die in einem in einer zweiten Querachse (Y) angeordneten Kolben (26) vorgesehen ist, gleitet, so dass, wenn die Temperatur den dritten Grenzwert überschreitet, sich das Plättchen (23) verformt, um den Stift (25a, 25b) zur Gänze in die Aufnahme (26a) des Kolbens (26) zu verschieben.

9. Ventil nach einem der Ansprüche 4 bis 8, bei dem die Versorgungsleitung (19) Mittel zur Ableitung des Gases (34c) stromaufwärts zur Wicklung (8c) des Magnetventils (8a) umfasst.

10. Ventil nach einem der Ansprüche 2 bis 9, bei dem die Kappe (3) ein Ablassventil (3b) umfasst, das das in der Kappe (3) vorhandene Gas aus dem Ventil (1) ableitet.

11. Ventil nach einem der vorhergehenden Ansprüche, umfassend einen Druckfühler (16) des Gases am Ausgang der Regelungsvorrichtung (7).

12. Ventil nach einem der vorhergehenden Ansprüche, bei dem der Ventilkörper (2) eine Isoliervorrichtung (15) des Behälters von den Regelungs- (7) und Füllvorrichtungen (6) einschließt.

13. Ventil nach einem der vorhergehenden Ansprüche, umfassend eine manuelle Ablassvorrichtung (14), die zwischen der Regelungsvorrichtung (7) und dem Magnetventil (8a) angeordnet ist.

14. Ventil nach einem der vorhergehenden Ansprüche, umfassend eine Sonde (8d) zum Messen der Temperatur in der Wicklung (8c) des Magnetventils (8a) .

15. Ventil nach einem der vorhergehenden Ansprüche, umfassend einen Gasleckage-Detektor (3c).

16. Ventil nach einem der vorhergehenden Ansprüche, umfassend eine elektronische Steuereinheit (13), die in einem dichten Gehäuse (4) eingeschlossen und dazu bestimmt ist, das Magnetventil (8a) zu steuern, die in dem Behälter (5) enthaltene Gasmasse auf Basis der gemessenen Druck- und Temperaturwerte in dem Behälter (5) zu berechnen, den Widerstand der Wicklung (8c) des Magnetventils (8a) auf Basis des gemessenen Temperaturwerts in der Wicklung (8c) zu berechnen, und den für die Steuerung des Magnetventils (8a) notwendigen Strom zu berechnen und anzulegen, in Abhängigkeit von dem gemessenen Druckwert am Ausgang der Regelungsvorrichtung (7).

17. System, umfassend ein Ventil (1) nach einem der Ansprüche 1 bis 15, eine elektronische Steuereinheit des Magnetventils (8a) und einen Gasleckage-Detektor, wobei die Steuereinheit geeignet ist, die Öffnung des Magnetventils (8a) im Falle der Erfassung einer Gasleckage in der Nähe des Ventils (1) zu verhindern.

## Claims

1. Valve, intended to be mounted on a tank (5) containing a high-pressure gas, **characterized in that** the valve body (2) incorporates a filling device (6) for filling the tank (5) with high-pressure gas, at least one discharge device (9a) for discharging the gas when the pressure of the gas in the tank (5) exceeds a first threshold value, a regulating device (7) for regulating the pressure of the high-pressure gas such that it becomes a low-pressure gas, and a supply device (8) for supplying low-pressure gas to an apparatus that uses a low-pressure gas, the supply device (8) comprising a solenoid valve (8a) controlling the supply of low-pressure gas to the apparatus that uses a low-pressure gas, **characterized in that** the solenoid valve (8a) is conceived such as to close or to remain closed when the pressure in the conduit between the regulating device (7) and the solenoid valve (8a) is above a second threshold value.

2. Valve according to Claim 1, comprising a sensor (17) and a sensor (12a) for sensing the pressure and temperature respectively of the gas in the tank (5), said temperature sensor (12a) being fixed in a cover (3) mounted on a face of the valve body (2).

3. Valve according to Claim 1 or 2, wherein the filling device (6) comprises a check valve (6b).

4. Valve according to one of the preceding claims, wherein the valve body (2) has a primary conduit (11) running into the tank (5) and connected to three secondary conduits (18, 19, 20), more specifically a filling conduit (18), a supply conduit (19) and a discharge conduit (20).

5. Valve according to Claim 4, wherein the primary conduits (11), that is to say the filling conduit (18) and supply conduit (19), each comprise a filter (11a, 6c, 8b).

6. Valve according to one of the preceding claims, wherein the regulating device (7) comprises a pressurized chamber (28) comprising a deformable membrane (29), a member (31) cooperating with a seat (32), and a spring (33) pushing back said member (31) against its seat (32), the deformable membrane (29) cooperating with said member (31).

7. Valve according to one of the preceding claims, comprising a second discharge device (9b) for discharging the high-pressure gas when the temperature of the gas in the tank (5) exceeds a third threshold value.

8. Valve according to Claim 8, wherein the second discharge device (9b) comprises a pellet (23) formed from a shape-memory alloy cooperating with a needle (24) and at least one pin (25a, 25b) disposed in a first, vertical axis (Z) said pin (25a, 25b) being mounted slidingly in a housing (26a) provided in a piston (26) disposed in a second, transverse axis (Y), such that, when the temperature exceeds the third threshold value, the pellet (23) deforms so as to displace the pin (25a, 25b) fully in the housing (26a) of the piston (26).

9. Valve according to one of Claims 4 to 8, wherein the supply conduit (19) comprises gas evacuation means (34c) upstream of the coil (8c) of the solenoid valve (8a).

10. Valve according to one of Claims 2 to 9, wherein the cover (3) comprises a relief valve (3b) evacuating the gas present in the cover (3) to outside the valve (1).

11. Valve according to one of the preceding claims, comprising a pressure sensor (16) for sensing the pressure of the gas at the outlet of the regulating device (7).

12. Valve according to one of the preceding claims, wherein the valve body (2) incorporates an isolation device (15) for isolating the tank from the regulating device (7) and filling device (6).

13. Valve according to one of the preceding claims, comprising a manual purge device (14) disposed between the regulating device (7) and the solenoid valve (8a).

14. Valve according to one of the preceding claims, comprising a measuring probe (8d) for measuring the temperature in the coil (8c) of the solenoid valve (8a).

15. Valve according to one of the preceding claims, comprising a gas leak detector (3c).

16. Valve according to one of the preceding claims, comprising an electronic control unit (13) confined in a tight casing (4) and intended to control the solenoid valve (8a), to calculate the mass of gas contained in the tank (5) on the basis of the measured values of pressure and temperature in the tank (5), to calculate the resistance of the coil (8c) of the solenoid valve (8a) on the basis of the temperature value measured in the coil (8c), and to calculate and apply the current necessary to control the solenoid valve (8a) according to the pressure value measured at the outlet of the regulating device (7).

17. System comprising a valve (1) according to one of Claims 1 to 16, an electronic control unit for controlling the solenoid valve (8a), and a gas leak detector, the control unit being able to prevent the opening of the solenoid valve (8a) in the event of detection of a gas leak in proximity of the valve (1).
